# EUROPEAN PATENT SPECIFICATION

(11) **EP 4 361 999 B1**
(45) Date of publication and mention of the grant of the patent: **17.12.2025**
(21) Application number: 23205306.6
(22) Date of filing: 23.10.2023
(51) Int. Cl.: G08G 1/16, B60R 1/00, B60R 1/26

(54) **CAMERA MONITOR SYSTEM WITH ANGLED AWARENESS LINES**
KAMERAMONITORSYSTEM MIT ABGEWINKELTEN BEWUSSTSEINSLINIEN
SYSTÈME DE SURVEILLANCE DE CAMÉRA AVEC LIGNES DE RECONNAISSANCE INCLINÉES

(30) Priority: 24.10.2022 US 202263418688 P
(43) Date of publication of application: 01.05.2024
(73) Proprietor: Stoneridge Electronics AB, 16903 Solna (SE)
(72) Inventor: SHARMA, Utkarsh, Farmington Hills, 48334 (US); MA, Liang, Rochester, 48306 (US); PHAN, Nguyen, Troy, 48083 (US); COOPRIDER, Troy, White Lake, 48386 (US)
(74) Representative: Marks & Clerk LLP

(56) References cited:
- EP-B1- 3 138 736
- US-A1- 2011 181 728
- US-A1- 2016 137 126
- US-A1- 2019 241 126
- US-A1- 2021 094 473
- US-B2- 10 946 800

## Description

### TECHNICAL FIELD

This disclosure relates to a camera monitor system (CMS) for use in a commercial truck or similar vehicle, and, in particular, to a CMS having displayed awareness lines relating to vehicle location.

### BACKGROUND

Mirror replacement systems, and camera systems for supplementing mirror views, are utilized in commercial vehicles to enhance the ability of a vehicle operator to see a surrounding environment. Camera monitor systems (CMS) utilize one or more cameras to provide an enhanced field of view to a vehicle operator. In some examples, the CMS covers a larger field of view than a conventional mirror, or includes views that are not fully obtainable via a conventional mirror.

In a typical CMS, there is a camera arm arranged on each of the left- and righthand sides of the vehicle to provide Class II and Class IV views. A display is provided on the A-pillar on both driver and passenger sides to display the field of view for the camera arm on that side, simulating a conventional mirror.

Long trailers frequently are pulled by tractors in commercial trucking. It is difficult for the driver to accurately observe the location of the trailer end during maneuvers such as lane changes. To this end, it is desirable to provide a CMS that displays "awareness lines" that are calculated to indicate the trailer end location or a location aft of the trailer end in order to allow the driver to operate the vehicle more safely.

EP3138736 B1 discloses relates to a mirror replacement system as a camera monitor system (CMS) of a motor vehicle, in particular a commercial vehicle.

US2019/241126 A1 discloses a method and system for generating a combined rearview image of an area behind a vehicle that is towing a trailer, the method including: capturing a first image from a vehicle camera that is installed on the vehicle, the first image being comprised of an area behind the vehicle; capturing a second image from a trailer camera that is installed on the trailer, the second image being comprised of an area behind the trailer; determining an obstructed viewing region within the first image, the obstructed viewing region being a region of the first image in which the trailer resides; overlaying the second image on the first image and at least partially within the obstructed viewing region; and inserting graphics in the first image, in the second image, and/or in a patch region within the obstructed viewing region and between the second image and the first image.

US2021/094473 A1 a vehicular trailering assist system including a vehicle rear backup camera disposed at a rear portion of a vehicle and viewing at least rearward of the vehicle. A trailer hitched to the vehicle includes a trailer rear camera disposed at a rear portion of the trailer and viewing at least rearward of the trailer. The control displays at a display device in the vehicle a surround view image using an avatar of the vehicle and an avatar of the trailer. The control stitches images derived from image data captured by the vehicle rear backup camera and images derived from the trailer rear camera to provide a transparent trailer view, and the display device displays transparent trailer view video images. Responsive to the vehicle being shifted into a reverse gear, the display device automatically displays rear backup images derived from image data captured by the trailer rear camera.

US2016/137126 A1 discloses a vision system of a vehicle including a camera having a lens and a two dimensional imaging array sensor. The camera is disposed at a side of a body of a vehicle and has a field of view exterior of the vehicle and at least rearward of the vehicle. The camera captures image data. The imaging array sensor has a centre region. The lens is configured to focus light at the imaging array sensor, and the lens has a centre axis. The lens is disposed at the imaging array sensor with the centre axis of the lens laterally offset from the centre region of the imaging array sensor. A video display is disposed in the vehicle and is viewable by a driver of the vehicle when the driver is normally operating the vehicle. The video display is operable to display video images derived from image data captured by the camera.

### SUMMARY

A method of displaying awareness lines in a camera monitor system for a vehicle is defined by appended claim 1. The method includes detecting an adjacent lane marker to the vehicle, calculating an awareness line that is perpendicular to the adjacent lane marker, and displaying the awareness line in relation to a trailer end location.

Further embodiments of the method are defined by appended clams 2 to 6.

The adjacent lane marker may be at least one of a dashed line lane marker or a solid line lane marker in the roadway.

The awareness line may be immediately adjacent to a tractor trailer that is indicative of the trailer end location.

The method may include a step of capturing images with a camera, and the detecting step is performed using a line recognition algorithm based upon the captured images.

The method may include a step of mapping real world distance to pixel distance, and the displaying step may include displaying the pixel distance to illustrate the awareness line.

The displaying step may include illustrating the awareness line at the trailer end location.

The displaying step may include illustrating the awareness line aftward of the trailer end location to indicate a distance behind the trailer end location.

The displaying step may include illustrating the awareness line as a width corresponding to one lane in the roadway.

The adjacent lane marker may be curved, and the awareness line may be displayed perpendicular to a line tangent to the curved adjacent lane marker.

A camera monitor system for a vehicle is defined by appended claim 7. The camera monitor system includes multiple cameras that include first and second cameras that respectively provide first and second fields of view. Multiple displays include first and second displays that are configured to respectively depict at least portions of the first and second fields of view. A controller is in communication with the first and second displays and the first and second cameras. The controller is configured to detect an adjacent lane marker to the vehicle based upon images that are captured by at least one of the first and second camera. The controller is configured to calculate an awareness line that is perpendicular to the adjacent lane marker and display the awareness line on at least one of the first and second displays in relation to a trailer end location of the vehicle.

Further embodiments of the camera monitor system are defined by appended claims 8 to 15.

The first and second fields of view respectively may capture left and right sides of a vehicle. Each of the first and second fields of view may include at least a portion of Class II and/or Class IV views.

The adjacent lane marker may be at least one of a dashed line lane marker or a solid line lane marker in the roadway.

The awareness line may be immediately adjacent to a tractor trailer that is indicative of the trailer end location.

The controller may be configured to perform a line recognition algorithm to identify the adjacent lane marker based upon the captured images.

The controller may be configured to map real world distance to pixel distance, and the awareness line may illustrate the pixel distance.

The controller may be configured to illustrate the awareness line on the at least one of the first and second displays at the trailer end location.

The controller may be configured to illustrate the awareness line aftward of the trailer end location to indicate a distance behind the trailer end location.

The controller may be configured to illustrate the awareness line as a width corresponds to one lane in the roadway.

The adjacent lane marker may be curved, and the controller may be configured to display the awareness line perpendicular to a line that is tangent to the curved adjacent lane marker.

### BRIEF DESCRIPTION OF THE DRAWINGS

The disclosure can be further understood by reference to the following detailed description when considered in connection with the accompanying drawings wherein:
Figure 1A is a schematic front view of a commercial truck with a camera monitor system (CMS) used to provide at least Class II and Class IV views.
Figure 1B is a schematic top view of a commercial truck with a camera mirror system providing Class II, Class IV, Class V and Class VI views.
Figure 2 is a schematic top view of a vehicle cabin including displays.
Figure 3 is a flowchart illustrating a method of generating an awareness line on at least one of the displays.
Figure 4 is a depicting of awareness lines on the display according to the disclosed method.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible. Like reference numbers and designations in the various drawings indicate like elements.

### DETAILED DESCRIPTION

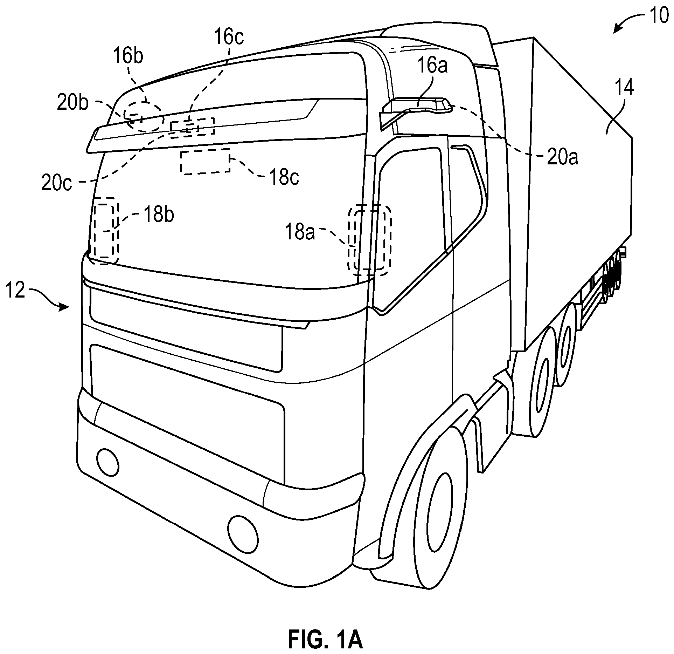

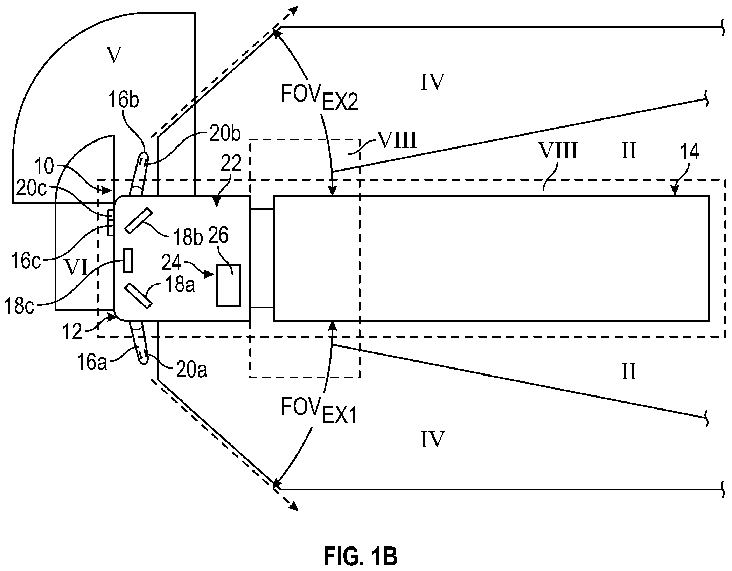

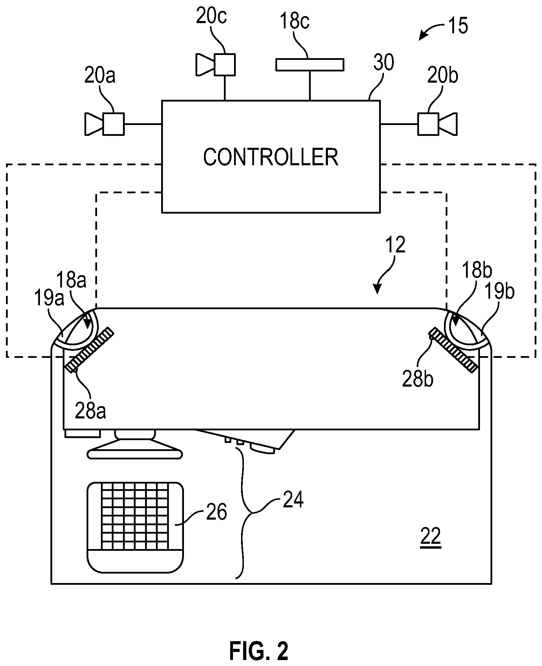

A schematic view of a commercial vehicle 10 is illustrated in Figures 1A and 1B. The vehicle 10 includes a vehicle cab or tractor 12 for pulling a trailer 14. It should be understood that the vehicle cab 12 and/or trailer 14 may be any configuration. Although a commercial truck is contemplated in this disclosure, the invention may also be applied to other types of vehicles. The vehicle 10 incorporates a camera monitor system (CMS) 15 (Fig. 2) that has driver and passenger side camera arms 16a, 16b mounted to the outside of the vehicle cab 12. If desired, the camera arms 16a, 16b may include conventional mirrors integrated with them as well, although the CMS 15 can be used in some examples to entirely replace mirrors. In additional examples, each side can include multiple camera arms, each arm housing one or more cameras and/or mirrors. Each arm 16a, 16b may also provide a housing that encloses electronics, e.g., a controller, that are configured to provide various features of the CMS 15.

Each of the camera arms 16a, 16b includes a base that is secured to, for example, the cab 12. A pivoting arm is supported by the base and may articulate relative thereto. At least one rearward facing camera 20a, 20b is arranged respectively within camera arms 16a, 16b. The exterior cameras 20a, 20b respectively provide an exterior field of view FOV_{EX1}, FOV_{EX2} that each include at least one of the Class II and Class IV views (Fig. 1B), which are legal prescribed views in the commercial trucking industry. The Class II view on a given side of the vehicle 10 is a subset of the class IV view of the same side of the vehicle 10. Multiple cameras also may be used in each camera arm 16a, 16b to provide these views, if desired. Class II and Class IV views are defined in European R46 legislation, for example, and the United States and other countries have similar driver visibility requirements for commercial trucks. Any reference to a "Class" view is not intended to be limiting, but is intended as exemplary for the type of view provided to a display by a particular camera.

First and second video displays or monitors 18a, 18b are arranged on each of the driver and passenger sides within the vehicle cab 12 on or near the A-pillars 19a, 19b (generally, A-pillar 19) to display Class II and Class IV views on its respective side of the vehicle 10, which provide rear facing side views along the vehicle 10 that are captured by the exterior cameras 20a, 20b.

If video of Class V and/or Class VI views are also desired, a camera housing 16c and camera 20c may be arranged at or near the front of the vehicle 10 to provide those views (Fig. 1B). A third display 18c arranged within the cab 12 near the top center of the windshield can be used to display the Class V and Class VI views, which are toward the front of the vehicle 10, to the driver. The displays 18a, 18b, 18c (generally, display 18) face a driver region 24 within the cabin 22 where an driver/operator is seated on a driver seat 26. The location, size and field(s) of view streamed to any particular display may vary from the configurations described in this disclosure and still incorporate the disclosed invention.

If video of Class VIII views is desired, camera housings can be disposed at the sides and rear of the vehicle 10 to provide fields of view including some or all of the Class VIII zones of the vehicle 10. In such examples, the third display 18c can include one or more frames displaying the Class VIII views. Alternatively, additional displays can be added near the first, second and third displays 18a, 18b, 18c and provide a display dedicated to providing a Class VIII view.

Referring to Figure 2, each display 18a, 18b (and perhaps others, if desired) includes a housing mounted to its respective A-pillar 19 (i.e., 19a, 19b) by a bracket, for example, or integrated into vehicle trim. A screen 28 (i.e., 28a, 28b) is mounted in a front of the housing facing the driver. The screen 28 can be any suitable screen such as TFT, LCD, LED, OLED and others.

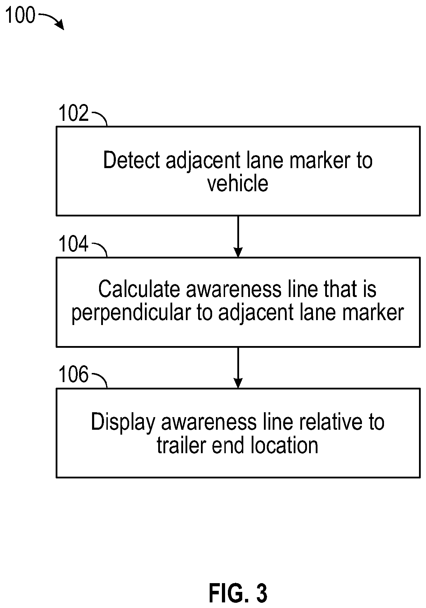

It is difficult for the driver to accurately observe the location of the trailer end during maneuvers such as lane changes due to the relatively long length of the trailer. To this end, it is desirable to provide "awareness lines" on at least one of the displays 18a, 18b that are calculated to indicate the trailer end location or a location aft of the trailer end in order to allow the driver to operate the vehicle more safely. A method 100 of creating and displaying awareness lines is shown in Figure 3. Generally, the method includes the steps of detecting an adjacent lane marker to the vehicle (block 102), calculating an awareness line that is perpendicular to the adjacent lane marker (block 104), and displaying the awareness line in relation to a trailer end location (block 106).

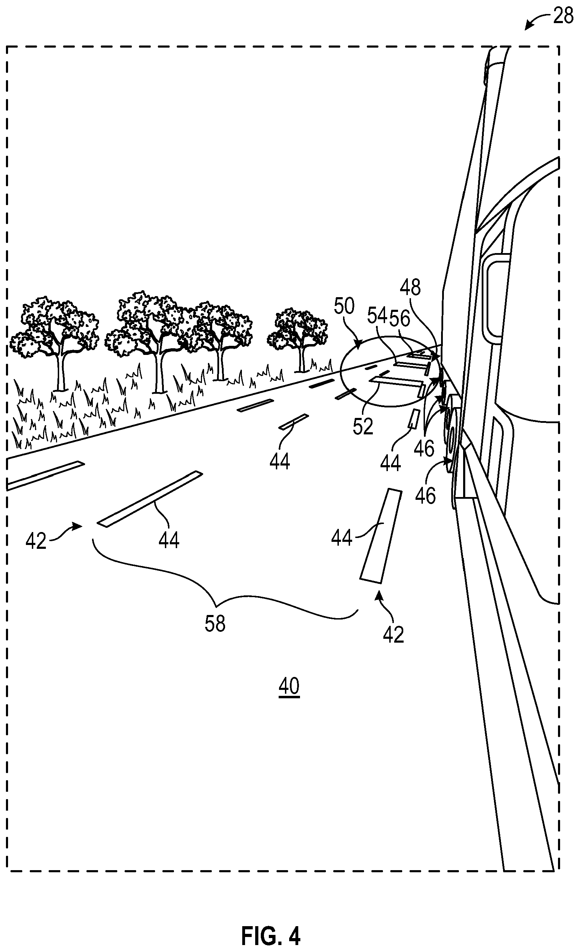

Referring to Figure 4, the screen 28 of one of the displays 18a, 18b illustrates the vehicle and its trailer in a roadway 40. A typical roadway 40 includes adjacent lane markers 42 defining lanes of travel. In one example, the adjacent lane markers 42 comprise individual, discrete markings 44, such as painted dashes, which may communicate it is permissible to pass into the lane or communicate other information to drivers.

The line markers 42 can be identified using image processing of the images captured by the one or more cameras 20. One example technique for detecting lines or lane markers using a line recognition algorithm is disclosed in United States application serial number 17/504,648, entitled "CAMERA MIRROR SYSTEM DISPLAY FOR COMMERCIAL VEHICLES INCLUDING SYSTEM FOR IDENTIFYING ROAD MARKINGS", filed on October 19, 2021 and incorporated herewith in its entirety.

Calculating an awareness line that is perpendicular to the adjacent lane marker (block 104) is performed with reference to the location of interest on the vehicle, for example, the trailer end. The trailer end is also used for determining awareness lines used to indicate a distance aft of the trailer end, e.g., a distance corresponding to an acceptable vehicle overtaking/passing distance. The location of interest is then used to determine the point on the lane marker at which the perpendicular awareness line is calculated. In cases in which the adjacent lane marker is curved, the awareness line is calculated perpendicular from a line tangent to the adjacent lane marker. The adjacent lane marker need not be the line immediately adjacent to the vehicle, but may be on the other side of the lane, based upon a curb, and/or a shoulder of the roadway.

For a location of interest such as the trailer end 48, various techniques may be used to identify the trailer end. The trailer end 48 can be determined at least in part by identifying the trailer's wheels 46, for example. One example technique of determining the trailer edge and displaying awareness lines is disclosed in provisional application serial number 63/325,788, entitled "DYNAMIC LONGITUDINAL AND LATERAL ADJUSTMENT OF AWARENESS LINES FOR COMMERCIAL VEHICLE CAMERA MIRROR SYSTEM", filed on March 31, 2022 and incorporated herewith in its entirety. However, this disclosed technique displays the awareness lines horizontally on the display.

Once the perpendicular line from the location of interest has been determined, this perpendicular line is mapped from real world distance to pixel distance to determine how this imaginary line should be illustrated on the display 18 to the driver as a useful awareness line. In one example, it is desirable to display the awareness line as a line that corresponds to the width 58 of one adjacent lane in the roadway.

In the example, multiple awareness lines 50 are displayed. For example, a first awareness line 52 corresponds to the trailer end 48, a second awareness line 54 corresponds to a first distance aft of the trailer end 48, and a third awareness line 56 aft of the trailer end 48 and the second awareness line 54. Since the awareness lines 50 are displayed in such a way so as to correspond to the lane width 58, the awareness lines 50 become smaller in the direction of the vanishing point of the displayed image.

In terms of hardware architecture, such a computing device can include a processor, memory, and one or more input and/or output (I/O) device interface(s) that are communicatively coupled via a local interface. The local interface can include, for example but not limited to, one or more buses and/or other wired or wireless connections. The local interface may have additional elements, which are omitted for simplicity, such as controllers, buffers (caches), drivers, repeaters, and receivers to enable communications. Further, the local interface may include address, control, and/or data connections to enable appropriate communications among the aforementioned components.

The controller 30 may be a hardware device for executing software, particularly software stored in memory. The controller 30 can be a custom made or commercially available processor, a central processing unit (CPU), an auxiliary processor among several processors associated with the controller, a semiconductor-based microprocessor (in the form of a microchip or chip set) or generally any device for executing software instructions.

The memory can include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). Moreover, the memory may incorporate electronic, magnetic, optical, and/or other types of storage media. The memory can also have a distributed architecture, where various components are situated remotely from one another, but can be accessed by the processor.

The software in the memory may include one or more separate programs, each of which includes an ordered listing of executable instructions for implementing logical functions. A system component embodied as software may also be construed as a source program, executable program (object code), script, or any other entity comprising a set of instructions to be performed. When constructed as a source program, the program is translated via a compiler, assembler, interpreter, or the like, which may or may not be included within the memory.

The disclosed input and output devices that may be coupled to system I/O interface(s) may include input devices, for example but not limited to, a keyboard, mouse, scanner, microphone, camera, mobile device, proximity device, etc. Further, the output devices, for example but not limited to, a printer, display, etc. Finally, the input and output devices may further include devices that communicate both as inputs and outputs, for instance but not limited to, a modulator/demodulator (modem; for accessing another device, system, or network), a radio frequency (RF) or other transceiver, a telephonic interface, a bridge, a router, etc.

When the controller 30 is in operation, the processor can be configured to execute software stored within the memory, to communicate data to and from the memory, and to generally control operations of the computing device pursuant to the software. Software in memory, in whole or in part, is read by the processor, perhaps buffered within the processor, and then executed.

The disclosed method provides at least two benefits: (1) the awareness lines are confined to adjacent lane with the detection result of a lane maker and (2) the awareness lines are illustrated perpendicular to the lane marker. The displayed awareness lines help the driver to better estimate the distance of an object in the truck's blind spot near the trailer end, as they appear on the displays, to aid in making better judgement when maneuvering.

## Claims

1. A method of displaying awareness lines (50) in a camera monitor system (15) for a vehicle (10), comprising:
detecting an adjacent lane marker (42) to the vehicle (10);
calculating a first awareness line (52) corresponding to a trailer end location (48), a second awareness line (54) corresponding to a first distance aft of the trailer end location (48) indicating an acceptable vehicle overtaking/passing distance, and a third awareness line (56) aft of the trailer end location (48) and second awareness line (54), that are perpendicular to the adjacent lane marker (42); and
displaying the first, second and third awareness lines (52, 54, 56) in relation to a trailer end location (48).

2. The method of claim 1, comprising a step of capturing images with a camera, and wherein the detecting step is performed using a line recognition algorithm based upon the captured images.

3. The method of any preceding claim, comprising a step of mapping real world distance to pixel distance, and the displaying step includes displaying the pixel distance to illustrate the awareness line (52, 54, 56).

4. The method of any preceding claim, wherein the displaying step includes at least one of:
illustrating the first awareness line (52) at the trailer end location (48); and
illustrating the second and third awareness line (54, 56) aftward of the trailer end location (48) to indicate a distance behind the trailer end location (48).

5. The method of any preceding claim, wherein the displaying step includes illustrating the first, second and third awareness lines (52, 54, 56) as a width corresponding to one lane (58) in the roadway (40).

6. The method of any preceding claim, wherein the adjacent lane marker (42) is curved, and the first, second and third awareness line (52, 54, 56) is displayed perpendicular to a line tangent to the curved adjacent lane marker (42).

7. A camera monitor system (15) for a vehicle (10) comprising:
multiple cameras including first and second cameras (20a, 20b) respectively providing first and second fields of view (FOV_{EX1}, FOV_{EX2});
multiple displays including first and second displays (18a, 18b) configured to respectively depict at least portions of the first and second fields of view (FOV_{EX1}, FOV_{EX2});
a controller (30) in communication with the first and second displays (18a, 18b) and the first and second cameras (20a, 20b), the controller (30) configured to detect an adjacent lane marker (42) to the vehicle (10) based upon images captured by at least one of the first and second camera (20a, 20b), the controller (30) configured to calculate a first awareness line (52) corresponding to a trailer end location (48), a second awareness line a second awareness line (54) corresponding to a first distance aft of the trailer end location (48) indicating an acceptable vehicle overtaking/passing distance, and a third awareness line aft of the trailer end location (48) and second awareness line (54) that are perpendicular to the adjacent lane marker (42), and display the first, second and third awareness lines (52, 54, 56) on at least one of the first and second displays (18a, 18b) in relation to a trailer end location (48) of the vehicle (10).

8. The system (15) of claim 7, wherein the first and second fields of view (FOV_{EX1}, FOV_{EX2}) respectively capture left and right sides of a vehicle (10), each of the first and second fields of view (FOV_{EX1}, FOV_{EX2}) include at least a portion of Class II and/or Class IV views.

9. The system (15) of claim 7 or 8, wherein the controller (30) is configured to perform a line recognition algorithm to identify the adjacent lane marker (42) based upon the captured images.

10. The system (15) of any one of claims 7 to 9, wherein the controller (30) is configured to map real world distance to pixel distance, and the awareness line (52, 54, 56) illustrates the pixel distance.

11. The system (15) of any one of claims 7 to 10, wherein the controller (30) is configured to at least one of:
illustrate the first awareness line (52) on the at least one of the first and second displays (18a, 18b) at the trailer end location (48); and
illustrate the second and third awareness lines (54, 56) aftward of the trailer end location (48) to indicate a distance behind the trailer end location (48).

12. The system (15) of any one of claims 7 to 11, wherein the controller (30) is configured to illustrate the first, second and third awareness lines (52, 54, 56) as a width corresponding to one lane (58) in the roadway (40).

13. The system (15) of any one of claims 7 to 12, wherein the adjacent lane marker (42) is curved, and the controller (30) is configured to display the first, second and third awareness lines (52, 54, 56) perpendicular to a line tangent to the curved adjacent lane marker (42).

14. The method of any one of claims 1 to 6, wherein the adjacent lane marker (42) is at least one of a dashed line lane marker or a solid line lane marker in the roadway (40), and/or wherein the first, second and third awareness lines (52, 54, 56) are immediately adjacent to a tractor trailer (14) indicative of the trailer end location (48).

15. The system (15) of any one of claims 7 to 13, wherein the adjacent lane marker (42) is at least one of a dashed line lane marker or a solid line lane marker in the roadway (40), and/or wherein the first, second and third awareness lines (52, 54, 56) are immediately adjacent to a tractor trailer (14) indicative of the trailer end location (48).

## Patentansprüche

1. Verfahren zum Anzeigen von Aufmerksamkeitslinien (50) in einem Kameraüberwachungssystem (15) für ein Fahrzeug (10), umfassend:
Erkennen einer Markierung (42) der zum Fahrzeug (10) benachbarten Fahrspur;
Berechnen einer ersten Aufmerksamkeitslinie (52), die einer Position eines Anhängerendes (48) entspricht, einer zweiten Aufmerksamkeitslinie (54), die einem ersten Abstand hinter der Position des Anhängerendes (48) entspricht und einen akzeptablen Überhol-/Vorbeifahrabstand des Fahrzeugs angibt, und einer dritten Aufmerksamkeitslinie (56) hinter der Position des Anhängerendes (48) und der zweiten Aufmerksamkeitslinie (54), die senkrecht zur Markierung (42) der benachbarten Fahrspur verlaufen; und
Anzeigen der ersten, zweiten und dritten Aufmerksamkeitslinie (52, 54, 56) in Bezug auf eine Position des Anhängerendes (48).

2. Verfahren nach Anspruch 1, umfassend einen Schritt zum Aufnehmen von Bildern mit einer Kamera, und wobei der Erkennungsschritt unter Verwendung eines Linienerkennungsalgorithmus anhand der aufgenommenen Bilder durchgeführt wird.

3. Verfahren nach einem vorstehenden Anspruch, umfassend einen Schritt zum Zuordnen von Realweltabstand zu Pixelabstand, und wobei der Anzeigeschritt das Anzeigen des Pixelabstands zum Darstellen der Aufmerksamkeitslinie (52, 54, 56) einschließt.

4. Verfahren nach einem vorstehenden Anspruch, wobei der Anzeigeschritt mindestens eines der folgenden einschließt:
Darstellen der ersten Aufmerksamkeitslinie (52) an der Position des Anhängerendes (48); und
Darstellen der zweiten und dritten Aufmerksamkeitslinie (54, 56) hinter der Position des Anhängerendes (48), um einen Abstand hinter der Position des Anhängerendes (48) anzugeben.

5. Verfahren nach einem vorstehenden Anspruch, wobei der Anzeigeschritt das Darstellen der ersten, zweiten und dritten Aufmerksamkeitslinie (52, 54, 56) als eine Breite einschließt, die einer Spur (58) auf der Fahrspur (40) entspricht.

6. Verfahren nach einem vorstehenden Anspruch, wobei die Markierung (42) der benachbarten Fahrspur gekrümmt ist und die erste, zweite und dritte Aufmerksamkeitslinie (52, 54, 56) senkrecht zu einer Linie angezeigt werden, die die gekrümmte Markierung (42) der benachbarten Fahrspur tangiert.

7. Kameraüberwachungssystem (15) für ein Fahrzeug (10), umfassend:
mehrere Kameras, die eine erste und eine zweite Kamera (20a, 20b) einschließen, die ein erstes bzw. ein zweites Sichtfeld (FOV_{EX1}, FOV_{EX2}) bereitstellen;
mehrere Anzeigen, die eine erste und eine zweite Anzeige (18a, 18b) einschließen, die konfiguriert sind, um mindestens Abschnitte des ersten bzw. zweiten Sichtfelds (FOV_{EX1}, FOV_{EX2}) abzubilden;
eine Steuereinheit (30), die mit der ersten und zweiten Anzeige (18a, 18b) und der ersten und zweiten Kamera (20a, 20b) kommuniziert, wobei die Steuereinheit (30) konfiguriert ist, um eine Markierung (42) der zum Fahrzeug (10) benachbarten Fahrspur anhand der Bilder zu erkennen, die von mindestens einer der ersten und zweiten Kamera (20a, 20b) aufgenommen wurden, wobei die Steuereinheit (30) konfiguriert ist zum Berechnen einer ersten Aufmerksamkeitslinie (52), die einer Position des Anhängerendes (48) entspricht, einer zweiten Aufmerksamkeitslinie (54), die einem ersten Abstand hinter der Position des Anhängerendes (48) entspricht und einen akzeptablen Überhol-/Vorbeifahrabstand des Fahrzeugs angibt, und einer dritten Aufmerksamkeitslinie hinter der Position des Anhängerendes (48) und der zweiten Aufmerksamkeitslinie (54), die senkrecht zur Markierung (42) der benachbarten Fahrspur verlaufen, und um die erste, zweite und dritte Aufmerksamkeitslinie (52, 54, 56) auf mindestens einer der ersten und zweiten Anzeige (18a, 18b) in Bezug auf eine Position des Anhängerendes (48) des Fahrzeugs (10) anzuzeigen.

8. System (15) nach Anspruch 7, wobei das erste und das zweite Sichtfeld (FOV_{EX1}, FOV_{EX2}) die linke bzw. die rechte Seite eines Fahrzeugs (10) aufnehmen, wobei jedes des ersten und zweiten Sichtfelds (FOV_{EX1}, FOV_{EX2}) mindestens einen Abschnitt von Ansichten der Klasse II und/oder Klasse IV einschließen.

9. System (15) nach Anspruch 7 oder 8, wobei die Steuereinheit (30) konfiguriert ist, um einen Linienerkennungsalgorithmus durchzuführen, um die Markierung (42) der benachbarten Fahrspur anhand der aufgenommenen Bilder zu identifizieren.

10. System (15) nach einem der Ansprüche 7 bis 9, wobei die Steuereinheit (30) konfiguriert ist zum Zuordnen von Realweltabstand zu Pixelabstand, und die Aufmerksamkeitslinie (52, 54, 56) den Pixelabstand darstellt.

11. System (15) nach einem der Ansprüche 7 bis 10, wobei die Steuereinheit (30) für mindestens eines der folgenden konfiguriert ist:
Darstellen der ersten Aufmerksamkeitslinie (52) auf der mindestens einen der ersten und zweiten Anzeige (18a, 18b) an der Position des Anhängerendes (48); und
Darstellen der zweiten und dritten Aufmerksamkeitslinie (54, 56) hinter der Position des Anhängerendes (48), um einen Abstand hinter der Position des Anhängerendes (48) anzugeben.

12. System (15) nach einem der Ansprüche 7 bis 11, wobei die Steuereinheit (30) konfiguriert ist, um die erste, zweite und dritte Aufmerksamkeitslinie (52, 54, 56) als eine Breite darzustellen, die einer Spur (58) auf der Fahrspur (40) entspricht.

13. System (15) nach einem der Ansprüche 7 bis 12, wobei die Markierung (42) der benachbarten Fahrspur gekrümmt ist und die Steuereinheit (30) konfiguriert ist, um die erste, zweite und dritte Aufmerksamkeitslinie (52, 54, 56) senkrecht zu einer Linie anzuzeigen, die die gekrümmte Markierung (42) der benachbarten Fahrspur tangiert.

14. Verfahren nach einem der Ansprüche 1 bis 6, wobei die Markierung (42) der benachbarten Fahrspur mindestens eine von einer gestrichelten Fahrspurmarkierung oder einer durchgezogenen Fahrspurmarkierung auf der Fahrspur (40) ist und/oder wobei die erste, zweite und dritte Aufmerksamkeitslinie (52, 54, 56) unmittelbar benachbart zu einem Traktoranhänger (14) verlaufen, der die Position des Anhängerendes (48) angibt.

15. System (15) nach einem der Ansprüche 7 bis 13, wobei die Markierung (42) der benachbarten Fahrspur mindestens eine von einer gestrichelten Fahrspurmarkierung oder einer durchgezogenen Fahrspurmarkierung auf der Fahrspur (40) ist; und/oder
wobei die erste, zweite und dritte Aufmerksamkeitslinie (52, 54, 56) unmittelbar benachbart zu einem Traktoranhänger (14) verlaufen, der die Position des Anhängerendes (48) angibt.

## Revendications

1. Procédé d'affichage de lignes de sensibilisation (50) dans un système de surveillance par caméra (15) pour un véhicule (10), comprenant :
la détection d'un marqueur de voie adjacente (42) au véhicule (10) ;
le calcul d'une première ligne de sensibilisation (52) correspondant à un emplacement d'extrémité de remorque (48), une deuxième ligne de sensibilisation (54) correspondant à une première distance à l'arrière de l'emplacement d'extrémité de remorque (48) indiquant une distance de dépassement/doublage de véhicule acceptable, et une troisième ligne de sensibilisation (56) à l'arrière de l'emplacement d'extrémité de remorque (48) et une deuxième ligne de sensibilisation (54), qui sont perpendiculaires au marqueur de voie adjacente (42) ; et
l'affichage des première, deuxième et troisième lignes de sensibilisation (52, 54, 56) par rapport à un emplacement d'extrémité de remorque (48).

2. Procédé selon la revendication 1, comprenant une étape de capture d'images avec une caméra et dans lequel l'étape de détection est réalisée à l'aide d'un algorithme de reconnaissance de ligne basé sur les images capturées.

3. Procédé selon une quelconque revendication précédente, comprenant une étape de mappage de la distance du monde réel à la distance de pixel et l'étape d'affichage inclut l'affichage de la distance de pixel pour illustrer la ligne de sensibilisation (52, 54, 56).

4. Procédé selon une quelconque revendication précédente, dans lequel l'étape d'affichage inclut au moins une :
de l'illustration de la première ligne de sensibilisation (52) à l'emplacement d'extrémité de remorque (48) ; et
de l'illustration de la deuxième et de la troisième ligne de sensibilisation (54, 56) à l'arrière de l'emplacement d'extrémité de remorque (48) pour indiquer une distance derrière l'emplacement d'extrémité de remorque (48).

5. Procédé selon une quelconque revendication précédente, dans lequel l'étape d'affichage inclut l'illustration des première, deuxième et troisième lignes de sensibilisation (52, 54, 56) sous la forme d'une largeur correspondant à une voie (58) sur la chaussée (40).

6. Procédé selon une quelconque revendication précédente, dans lequel le marqueur de voie adjacente (42) est incurvé et la première, la deuxième et la troisième ligne de sensibilisation (52, 54, 56) sont affichées perpendiculairement à une ligne tangente au marqueur de voie adjacente incurvé (42).

7. Système de surveillance par caméra (15) pour un véhicule (10), comprenant :
de multiples caméras incluant des première et seconde caméras (20a, 20b) fournissant respectivement un premier et un second champs de vision (FOV_{EX1}, FOV_{EX2});
de multiples écrans incluant des premier et second écrans (18a, 18b) configurés pour représenter respectivement au moins des parties des premier et second champs de vision (FOV_{EX1}, FOV_{EX2}) ;
un dispositif de commande (30) en communication avec les premier et second écrans (18a, 18b) et les première et seconde caméras (20a, 20b), le dispositif de commande (30) étant configuré pour détecter un marqueur de voie adjacente (42) au véhicule (10) sur la base d'images capturées par au moins une des première et seconde caméras (20a, 20b), le dispositif de commande (30) étant configuré pour calculer une première ligne de sensibilisation (52) correspondant à un emplacement d'extrémité de remorque (48), une deuxième ligne de sensibilisation (54) correspondant à une première distance à l'arrière de l'emplacement d'extrémité de remorque (48) indiquant une distance de dépassement/doublage de véhicule acceptable, et une troisième ligne de sensibilisation à l'arrière de l'emplacement d'extrémité de remorque (48) et une deuxième ligne de sensibilisation (54) qui sont perpendiculaires au marqueur de voie adjacente (42), et affichent les première, deuxième et troisième lignes de sensibilisation (52, 54, 56) sur au moins l'un des premier et second écrans (18a, 18b) par rapport à un emplacement d'extrémité de remorque (48) du véhicule (10).

8. Système (15) selon la revendication 7, dans lequel les premier et second champs de vision (FOV_{EX1}, FOV_{EX2}) capturent respectivement les côtés gauche et droit d'un véhicule (10), chacun des premier et second champs de vision (FOV_{EX1}, FOV_{EX2}) incluant au moins une partie vues de classe II et/ou de classe IV.

9. Système (15) selon la revendication 7 ou 8, dans lequel le dispositif de commande (30) est configuré pour exécuter un algorithme de reconnaissance de ligne pour identifier le marqueur de voie adjacente (42) sur la base des images capturées.

10. Système (15) selon l'une quelconque des revendications 7 à 9, dans lequel le dispositif de commande (30) est configuré pour mapper la distance du monde réel à la distance de pixel, et la ligne de sensibilisation (52, 54, 56) illustre la distance de pixel.

11. Système (15) selon l'une quelconque des revendications 7 à 10, dans lequel le dispositif de commande (30) est configuré pour au moins une :
de l'illustration de la première ligne de sensibilisation (52) sur le au moins un des premier et second écrans (18a, 18b) à l'emplacement d'extrémité de remorque (48) ; et
de l'illustration des deuxième et troisième lignes de sensibilisation (54, 56) à l'arrière de l'emplacement d'extrémité de remorque (48) pour indiquer une distance derrière l'emplacement d'extrémité de remorque (48).

12. Système (15) selon l'une quelconque des revendications 7 à 11, dans lequel le dispositif de commande (30) est configuré pour illustrer les première, deuxième et troisième lignes de sensibilisation (52, 54, 56) sous la forme d'une largeur correspondant à une voie (58) sur la chaussée (40).

13. Système (15) selon l'une quelconque des revendications 7 à 12, dans lequel le marqueur de voie adjacente (42) est incurvé et le dispositif de commande (30) est configuré pour afficher les première, deuxième et troisième lignes de sensibilisation (52, 54, 56) perpendiculairement à une ligne tangente au marqueur de voie adjacente incurvé (42).

14. Procédé selon l'une quelconque des revendications 1 à 6, dans lequel le marqueur de voie adjacente (42) est au moins un marqueur de voie à ligne discontinue ou un marqueur de voie à ligne continue sur la chaussée (40) et/ou dans lequel les première, deuxième et troisième lignes de sensibilisation (52, 54, 56) sont immédiatement adjacentes à une remorque de tracteur (14) indiquant l'emplacement d'extrémité de remorque (48).

15. Système (15) selon l'une quelconque des revendications 7 à 13, dans lequel le marqueur de voie adjacente (42) est au moins un marqueur de voie à ligne discontinue ou un marqueur de voie à ligne continue sur la chaussée (40), et/ou
dans lequel les première, deuxième et troisième lignes de sensibilisation (52, 54, 56) sont immédiatement adjacentes à une remorque de tracteur (14) indiquant l'emplacement d'extrémité de remorque (48).
